(19) Europäisches Patentamt

European Patent Office

Office européen des brevets

(11) **EP 4 564 185 A1**

(12) **EUROPEAN PATENT APPLICATION**

(43) Date of publication:
**04.06.2025 Bulletin 2025/23**

(21) Application number: **23307090.3**

(22) Date of filing: **29.11.2023**

(51) International Patent Classification (IPC):
**G06F 15/78** *(2006.01)*     **G06F 15/80** *(2006.01)*

(52) Cooperative Patent Classification (CPC):
**G06F 15/7871;** G06F 15/80

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Commissariat à l'Energie Atomique et aux Energies Alternatives
75015 Paris (FR)**

(72) Inventor: **PRASAD, Rohit
91191 Gif-sur-Yvette Cedex (FR)**

(74) Representative: **Lavoix
2, place d'Estienne d'Orves
75441 Paris Cedex 09 (FR)**

(54) **COARSE-GRAINED RECONFIGURABLE ARRAY ARCHITECTURE AND ASSOCIATED METHOD**

(57)     The present invention concerns a coarse-grained reconfigurable array architecture (10) adapted to carry out tasks comprising:
- a network (12) of processing elements (PE),
- a network (14) of memory units (MU),
- a compiler (18) converting the tasks to be carried out into elementary operations consisting in applying a calculation on input data to calculate an output data by executing input data exchange instruction, a calculation instruction and an output data exchange instruction,

- a memory controller (20) fetching the input data exchange, calculation and output data exchange instructions,

the memory controller (20) sending each calculation and output data exchange to the appropriate processing element (PE) to execute said instructions, and
the memory controller (20) sending each input data exchange instruction to the appropriate memory unit (MU) to execute said instruction.

FIG.1

EP 4 564 185 A1

**Description**

The present invention concerns a coarse-grained reconfigurable array architecture and an associated method.

Coarse-Grained Reconfigurable Array (CGRA) architectures are notably used to accelerate the internal loops of an application code. The application code is generally analyzed and, the loops are identified from the rest of the code to be accelerated. Typically, the non-linear part of the code (all control and jump instructions) is executed on a general-purpose processor, which is generally located outside of the CGRA architecture and is accessible by a bus, and the CGRA is only used to accelerate the loops. Alternatively, a subset of the architecture can be used to execute this code.

Classically, for CGRA architectures, the execution of an accelerated part of code can be described in 3 steps:

1) the data is loaded into the CGRA architecture by the external processor,
2) the loop is executed, and
3) the processor retrieves the data.

This model can be improved by using components to accelerate data transfers.

Notably, document US 11544072 B proposes an architecture in which, between each processing unit, there is a data memory router, which has the effect of reducing the time required for a given processing unit to access memory.

However, such architecture is complex, and the gain in execution time is limited.

There is a need for a CGRA architecture with a reduced execution time while remaining simple to implement.

To this end, the specification describes a coarse-grained reconfigurable array architecture adapted to carry out tasks, the coarse-grained reconfigurable array architecture comprising:

- a network of processing elements, each processing element being connected with other processing elements by connections through which the processing element can exchange data with at least one of the other processing elements,
- a network of memory units, each memory unit being adapted to exchange data with several processing elements, each processing element being connected with at least one memory unit by connections through which the memory unit can exchange data with the processing element,
- a compiler adapted to convert the tasks to be carried out by the coarse-grained reconfigurable array architecture into elementary operations,

    each elementary operation consisting in applying a calculation on at least one input data to calculate an output data by executing at least one input data exchange instruction, a calculation instruction and an output data exchange instruction,

    the compiler being further adapted to allocate each instruction to the appropriate processing element or memory unit, and

- a memory controller adapted to fetch the input data exchange instructions, the calculation instructions and the output data exchange instructions,

    the memory controller being further adapted to send each calculation instruction and output data exchange to the appropriate processing element to execute said calculation instruction and said output data exchange instruction and the memory controller being further adapted to send each input data exchange instruction to the appropriate memory unit to execute said input data exchange instruction.

According to further aspects of the coarse-grained reconfigurable array architecture, which are advantageous but not compulsory, the coarse-grained reconfigurable array architecture might incorporate one or several of the following features, taken in any technically admissible combination:

- for each elementary instruction:

    the memory controller sends each calculation instruction and output data exchange instruction to a processing element to execute said calculation instruction and output data exchange instruction at a predefined time,
    the memory controller further sends each input data exchange instruction to a memory unit connected to said processing element, the input data exchange instructions being sent to the memory unit so that the memory unit has provided the input data to the processing element before the predefined time.

- for each elementary instruction:

  the memory controller sends each calculation instruction and output data exchange instruction to a processing element to execute said calculation instruction and output data exchange instruction at a predefined time,
  the memory controller further sends a respective input data exchange instruction to a respective memory unit connected to said processing element, the input data exchange instructions being sent to each memory unit so that the memory unit has provided the data to the processing element before the predefined time.

- the memory units provides simultaneously the data to the processing element.
- the network of processing elements is arranged in a bidimensional array.
- the network of processing elements comprises columns of processing elements and rows of processing elements and wherein, for each processing element, the processing elements with which a processing element can exchange data are the processing elements which are adjacent to said processing element along the row and the column to which said processing element belongs.
- the network of memory units is arranged in a bidimensional array.
- the bidimensional array of memory units comprises columns of memory units and rows of memory units, each memory unit being placed in a space delimited by four respective processing elements.
- each memory unit is adapted to communicate with four respective processing elements.

The specification also relates to a method for carrying out tasks with a coarse-grained reconfigurable array architecture, the coarse-grained reconfigurable array architecture comprising:

- a network of processing elements, each processing element being connected with other processing elements by connections through which the processing element can exchange data with at least one of the other processing elements,
- a network of memory units, each memory unit being adapted to exchange data with several processing elements, each processing element being connected with at least one memory unit by connections through which the memory unit (MU) can exchange data with the processing element,
- a compiler, and
- a memory controller,

the method comprising the steps of:

- converting the tasks to be carried out by the coarse-grained reconfigurable array architecture into elementary operations,

each elementary operation consisting in applying a calculation on at least one input data to calculate an output data by executing at least one input data exchange instruction, a calculation instruction and an output data exchange instruction,

- allocating each instruction to the appropriate processing element or memory unit,
- fetching the input data exchange instructions, the calculation instructions and the output data exchange instructions, the fetching step being carried out by the memory controller,
- sending each calculation instruction and output data exchange to the appropriate processing element to execute said calculation instruction and said output data exchange instruction, and
- sending each input data exchange instruction to the appropriate memory unit to execute said input data exchange instruction, the sending steps being carried out by the memory controller.

The invention will be better understood on the basis of the following description which is given in correspondence with the annexed figures and as an illustrative example, without restricting the object of the invention. In the annexed figures:

- figure 1 shows schematically an example of coarse-grained reconfigurable array (CGRA) architecture comprising processing elements and memory units,
- figure 2 shows a part of the CGRA architecture of figure 1,
- figure 3 shows the functional elements of an example of processing element,
- figure 4 shows the functional elements of an example of memory unit, and
- figure 5 illustrates schematically three scenarios of calculation of an elementary operation.

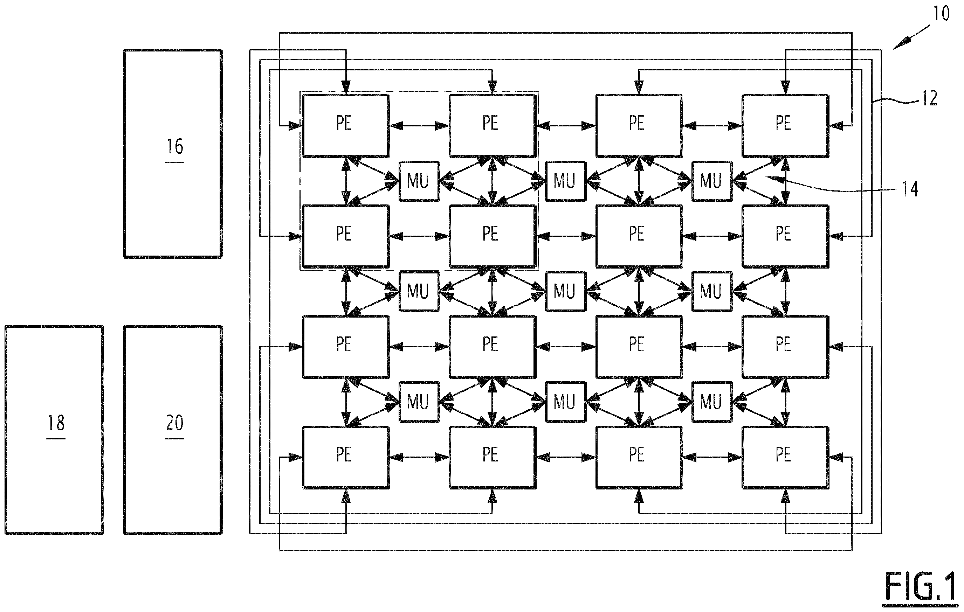

A coarse-grained reconfigurable array architecture is schematically represented on figure 1.

Such architecture is a multicore system adapted to carry out tasks by decomposing the task in subtasks carried out in a parallel way.

A coarse-grained reconfigurable array architecture is more often named using its abbreviation CGRA, so that the coarse-grained reconfigurable array architecture is named CGRA architecture 10 hereinafter.

The CGRA architecture 10 comprises a network 12 of processing elements PE, a network 14 of memory units MU and a memory controller 20.

The CGRA architecture 10 is in interaction with a shared L1 memory 16 and a compiler 18.

The shared L1 memory 16 is a cache memory placed exterior to the CGRA architecture 10, which is shared with a host processor.

The memory units MU are specialized cores to perform loading and storing of data between the shared L1 memory 16 and the CGRA architecture 10.

The compiler 18 is dedicated to the CGRA architecture 10 and can thus be construed in this example as a dedicated compiler 18. The compiler 18 is part of the associated toolchain of the CGRA architecture 10.

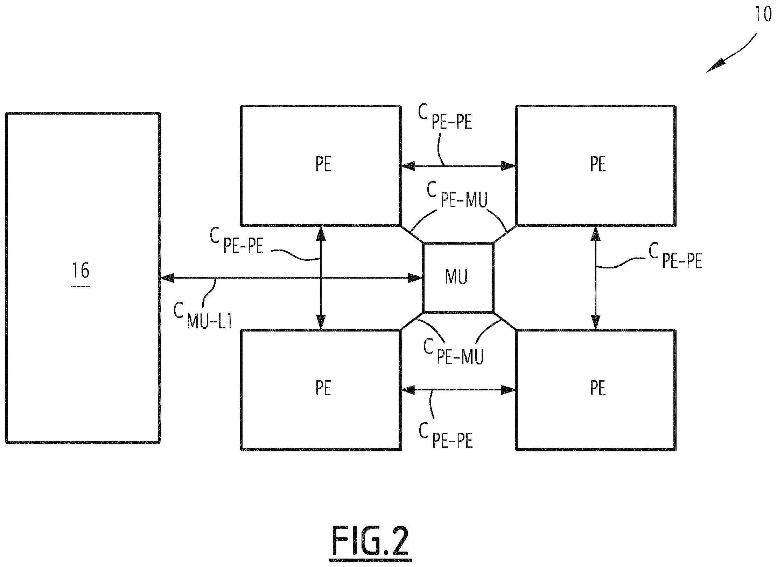

Before describing more precisely the operating of each unit, the geometry of the networks 12 and 14 of the CGRA architecture 10 is described more precisely in reference to figure 1 and to figure 2, which is an enlarged view of a part of figure 1.

The network 12 of processing elements PE is a bidimensional array.

Such network 12 therefore comprises columns of processing elements PE and rows of processing elements PE.

For the sake of simplicity, the network 12 of processing elements PE represented on figure 1 comprises 4 rows and 4 columns.

It can also be defined for the network 12 of processing elements PE in several directions: West corresponding to left, East corresponding to right, North corresponding to up and South corresponding to down.

Each processing element PE is connected with other processing elements PE by connections $C_{PE-PE}$ through which the processing element PE can exchange data with at least one of the other processing elements PE.

According to the example of figure 1, each connection $C_{PE-PE}$ is a hard-wired communication link.

In the present case, each processing element PE with which a processing element PE can exchange data are the processing elements PE which are adjacent to said processing element PE along the row and the column to which said processing element PE belongs.

In other words, a processing element PE can exchange data with four neighboring processing elements PE, a first one on the West, a second on the East, a third one on the North and a fourth one on the South.

For the processing element PE situated at one extremity of the network 12 and having no direct neighboring processing element PE in a direction, the processing element PE exchanges data with the processing element PE on the other extremity in the same direction.

For instance, the first processing element PE of the first row is adapted to exchange data with the last processing element PE of the first row and is adapted to exchange data with the last processing element PE of the first column.

The network 14 of memory units MU is also arranged in a bidimensional array.

Such network 14 therefore comprises columns of memory units MU and rows of memory units MU.

For the sake of simplicity, the network 14 of memory units MU represented on figure 1 comprises 3 rows and 3 columns.

The bidimensional array of memory units MU is spatially shifted with relation to the bidimensional array of processing elements PE.

Such spatial shift is such that each memory unit MU is placed in a space delimited by four respective processing elements PE.

This enables that each memory unit MU be at the same distance from four processing elements PE.

In the present example, each memory unit MU is adapted to communicate with four respective processing elements PE.

In other words, a memory unit MU can exchange data with four neighboring processing elements PE, a first one on the North-West, a second on the North-East, a third one on the South-West and a fourth one on the South-East.

Such communication $C_{PE-MU}$ is a hard-wired communication link.

In addition, each memory unit MU is connected to the shared L1 memory 16 via a connection $C_{MU-L1}$.

The existence of the communication channel between the different network 12 and 14 implies that each processing element PE and memory unit MU comprise dedicated elements.

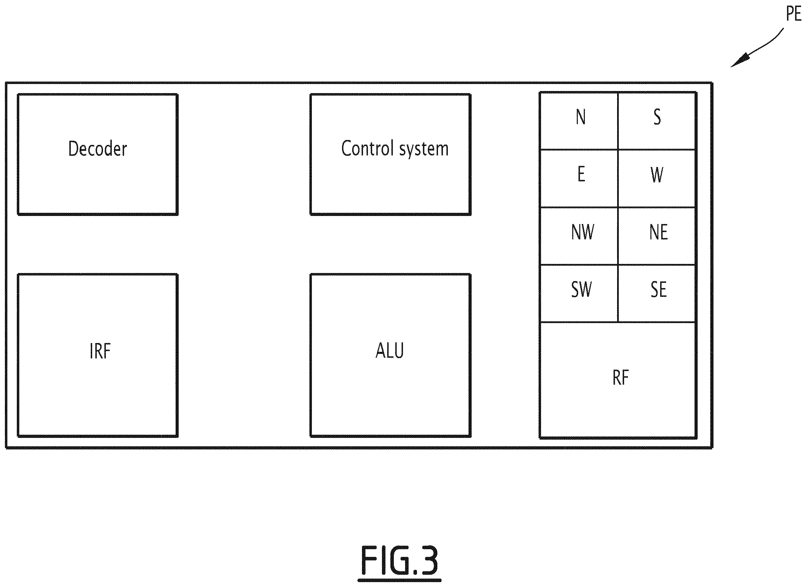

As apparent from figure 3, a processing element PE comprises an IRF, a decoder, an ALU, a control unit and several registers.

The IRF is an instruction register file comprising instructions to be executed by the processing element PE.

The processing element PE is indeed capable of executing an instruction at each clock cycle.

The decoder is adapted to convert the instruction in commands for the other blocks of the processing element PE.

The ALU is an arithmetic logic unit, in which the processing element PE makes a calculation on incoming data to calculate an output data.

The control unit is adapted to control the flux between the blocks of the processing element PE and notably ensure that the converted instructions be sent to the appropriate block.

The registers comprise several kind of registers, namely PE-PE registers, PE-MU registers and a register file RF.

The PE-PE registers are registers intended to broadcast information to all the four neighboring processing elements PE.

More precisely, in reference to figure 3, the N register stores data to be received from the processing element PE situated in the north of the processing element PE, the S register stores data to be received from the processing element PE situated in the south, the E register stores data to be received from the processing element PE situated in the east and the W register stores data to be received from the processing element PE situated in the west.

First indexed register R0 in the register file RF of each processing element PE temporarily stores the output from ALU which is broadcasted to adjacent processing elements PE. Any data which needs to be broadcasted to adjacent processing elements PE is moved to first indexed register R0 in the register file RF by issuing a MOVE instruction in that particular processing element PE.

The PE-MU registers are intermediate registers between the processing element PE and its neighboring memory units MU.

There are thus four PE-MU registers in each processing element PE, namely NW, NE, SW, and SE, to receive incoming data from the associated memory unit MU in North-West, North-East, South-West, and South-East directions, respectively.

The register file RF is a local register file to store temporary data within a processing element PE.

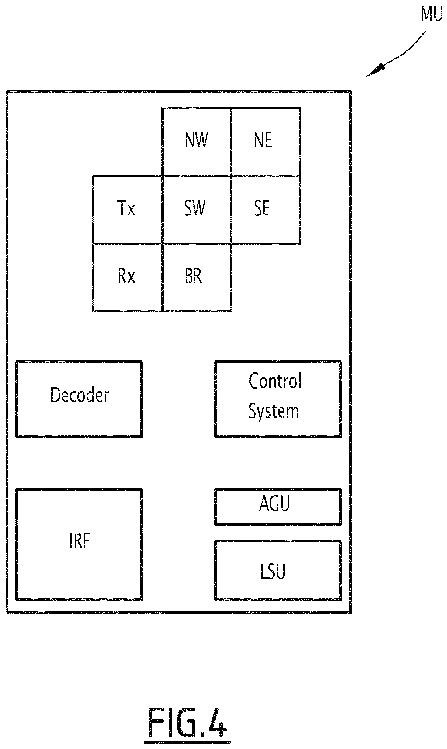

As apparent from figure 4, a memory unit MU comprises an IRF, a decoder, a control unit, an AGU, a LSU and several registers.

The IRF, decoder and control unit are similar to the corresponding block of the processing element PE.

The AGU is the address generation unit.

The LSU is the load-store unit.

The register comprises seven registers: a Tx register, a Rx register, a BR register and 4 PE registers.

The Tx register is the transmitter register and is meant to send data to the shared L1 memory 16 for storing.

By issuing a MOVE instruction in the memory unit MU, data stored in the PE registers are moved to said Tx register.

The sent data is later stored in the shared L1 memory 16 by issuing a STORE instruction in the memory unit MU.

The Rx register is the receiver register and is meant to receive data from the shared L1 memory 16 and store the received data.

The memory unit MU loads data from shared L1 memory 16 into the Rx register by issuing a LOAD instruction.

The BR register is a broadcast register serving to store data to be broadcasted to the neighboring processing elements PE in each direction, respectively North-West, North-East, South-West, and South-East directions, respectively.

The BR register receives data from the Rx register.

Each PE register is dedicated to the receiving of data from a respective processing element PE.

There is thus a NE register to receive data from the north-east processing element PE, a NW register to receive data from the north-west processing element PE, a SW register to receive data from the south-west processing element PE and a SE register to receive data from the south-east processing element PE.

The memory controller 20 is adapted to distribute the instructions to the different processing elements PE and memory units MU.

In the present case, the compiler 18 is used to convert the application to be executed on the CGRA architecture 10 into elementary operations for each processing element PE and memory unit MU.

By definition, an elementary operation is the application of a calculation on at least one input data to calculate an output data.

A task is made of many elementary operations.

An elementary operation is carried out by executing at least one input data exchange instruction, a calculation instruction and an output data exchange instruction.

The compiler 18 is further adapted to allocate each instruction to the appropriate processing element PE or memory unit MU.

For instance, each processing element PE or memory unit MU implied in the execution of the operation should ideally be very close.

In operation, the memory controller 20 is adapted to fetch the input data exchange instructions, the calculation instructions and the output data exchange instructions stored in a separate memory.

More precisely, the instructions for each processing unit PE and memory unit MU generated from the compiler 18 are stored in a separate memory, which is accessed by the memory controller 20 and distributed to each processing unit PE and memory unit MU respectively.

It can here be noted that these operations of fetching instructions and distributing them is carried out before the beginning of the execution of the CGRA architecture 10.

The memory controller 20 sends each calculation instruction and output data exchange to the appropriate processing element PE to execute said calculation instruction and said output data exchange instruction and the memory controller 20 also sends each input data exchange instruction to the appropriate MU to execute said input data exchange instruction before the execution begins in the CGRA architecture 10.

In other words, each processing element PE is dedicated to perform arithmetic and logic calculations and not to manage the input data movements.

In addition, the processing elements PE and the memory units MU operate separately by executing their own instruction routines.

Such operation correspond to a method for carrying out tasks with the CGRA architecture 10, said method comprising a first phase carried out by the compiler 18 and a second phase carried out by the memory controller 20.

The first phase comprises a step of converting the tasks to be carried out by the coarse-grained reconfigurable array architecture into elementary operations and a step of allocating each instruction to the appropriate processing element or memory unit.

The second comprises fetching the input data exchange instructions, the calculation instructions and the output data exchange instructions, a first step of sending each calculation instruction and output data exchange to the appropriate processing element PE to execute said calculation instruction and said output data exchange instruction, and a second step of sending each input data exchange instruction to the appropriate memory unit MU to execute said input data exchange instruction, the sending steps being carried out by the memory controller 20.

The synchronization between the instructions and their execution by the processing elements PE and the memory units MU is ensured at the level of compilation by the compiler 18. The scheduling of the operations is performed separately by the compiler 18.

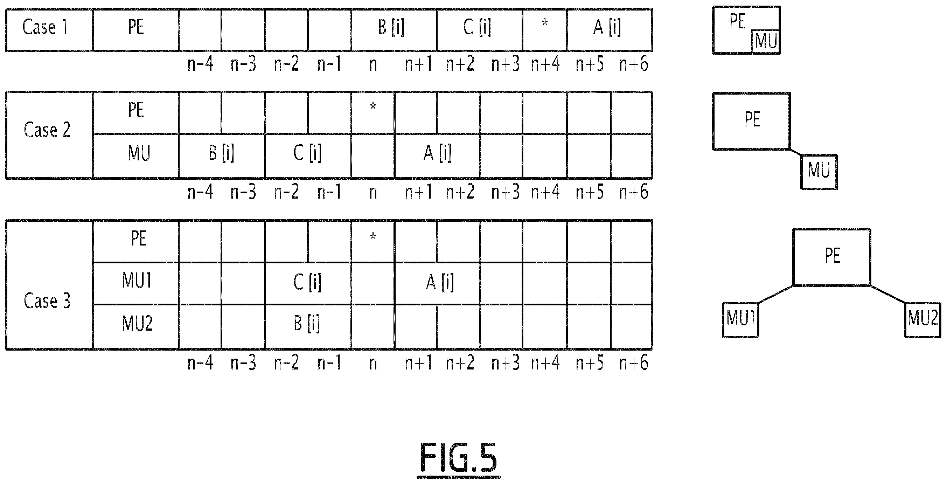

This enables to speed up the execution of the elementary operations, as will be shown in reference to figure 5.

Figure 5 illustrates the action carried out by a memory unit MU and the processing unit for three different cases.

The first case corresponds to the case where the processing unit and the memory unit MU are fused into a single module.

In such case, the processing element PE also manages the input data movements.

Therefore, at a predefined time named n, the processing element PE receives instructions to carry out the elementary operation A[i] = B[i] * C[i], where B[i] and C[i] are the data to be loaded from memory, and A[i] is the result to be stored in memory which is obtained from the multiplication of B[i] and C[i].

Each time is here timestamped by a clock unit, which is not represented.

The execution of the received instructions leads to the following actions:

- the processing element PE requests loading of B[i] to shared L1 memory 16 at time n,
- the processing element PE receives B[i] at time n+1,
- the processing element PE requests loading of C[i] to shared L1 memory 16 at time n+2,
- the processing element PE receives C[i] at time n+3,
- the processing element PE carries out B[i] * C[i] at time n+4,
- the processing element PE sends the result A[i] at time n+5 for storing in shared L1 memory 16, and
- the result A[i] is stored in the shared L1 memory 16 at time n+6.

This means that 7 clock cycles are necessary to carry out the element operation A[i] = B[i] * C[i], given that no memory stalls occur during the execution.

By comparison, the second case and third case illustrates the advantages provided by the use of the CGRA architecture 10 as presently described.

Case 2 corresponds to a decoupled scenario in which at least one processing element PE and one memory unit MU are separated and forms a group.

In other words, in this scenario, the input data exchange instructions are sent to the memory unit MU so that the memory unit MU has provided the input data to the processing element PE before the predefined time n.

The execution of the received instructions leads to the following actions:

- the memory unit MU sends request to shared L1 memory 16 to load B[i] at time n-4,
- the memory unit MU receives B[i] from shared L1 memory 16 at time n-3, and B[i] is immediately available to the processing element PE,
- the memory unit MU requests to shared L1 memory 16 to load C[i] at time n-2,
- the memory unit MU receives C[i] from shared L1 memory 16 at time n-1, and C[i] is immediately available to the processing unit PE ,
- the PE carries out B[i] * C[i] at time n, and result A[i] is immediately available to the memory unit MU,
- the memory unit MU sends the result A[i] at time n+1 for storing in shared L1 memory 16, and
- the result A[i] is stored in the shared L1 memory 16 at time n+2.

The number of clock cycles necessary to carry out the elementary operation is thus the same with relation to case 1 but the result is available 4 clock cycles before at time n+2 and not at time n+6.

Case 3 corresponds to an enhanced execution scenario wherein several memory units MU are used, namely a first memory unit MU1 and a second memory unit MU2.

In such case, the memory controller 20 sends respective input data exchange instructions to a respective memory unit MU connected to the processing element PE, the input data exchange instructions being sent to each memory unit MU so that the memory unit MU has provided the data to the processing element PE before the predefined time n.

It is also assumed that the memory units MU provide simultaneously their respective input data to the processing element PE.

The execution of the received instructions leads to the following actions:

- the first memory unit MU1 requests loading of B[i] from the shared L1 memory 16 at time n-2,
- the first memory unit MU1 receives B[i] from the shared L1 memory 16 at time n-1, and B[i] is immediately available to the processing element PE,
- the second memory unit MU2 requests loading of C[i] from the shared L1 memory 16 at time n-2,
- the second memory unit MU2 receives C[i] from the shared L1 memory 16 at time n-1, and C[i] is immediately available to PE,
- the processing element PE carries out B[i] * C[i] at time n, and result A[i] is immediately available to both the first memory unit MU1 and the second memory unit MU2,
- depending on the scheduling during the compilation time, either the first memory unit MU1 or the second memory unit MU2 sends the result A[i] at time n+1 for storing in the shared L1 memory 16, and
- the result A[i] is stored in the shared L1 memory 16 at time n+2.

In this case, the total execution time is reduced to 5 clock cycles thanks to the fact that each data loading is performed in parallel, and sharing of data between processing element PE and the memory units MU1 and MU2 is carried out as soon as data is available in the either memory units MU1/MU2 or the processing element PE.

The Overall Speedup provided by the case 3 with relation to case 1 can be obtained by applying an Amdahl's law.

The Overall Speedup therefore fulfills the following relation:

$$OS = \frac{1}{(1 - FE) + \left(\frac{FE}{SE}\right)}$$

Where:

- OS designates the overall speedup,
- FE designates the fraction enhanced equal to the ratio of the time that can be enhanced over the total time, and
- SE designates the speedup enhanced equal to the ratio of the time that can be enhanced over the time after enhancement.

In the present case, the time that cannot be enhanced is equal to 3 clock cycles (the instruction carried out by the processing element PE and following instruction carried out by the memory unit MU) and the time that can be enhanced is equal to 4 clock cycles (the instructions carried out by the memory units MU, i.e., the instructions scheduled before the arithmetic operation to be carried out by the processing element PE). This leads to a total time of 7 clock cycles.

After enhancement, instead of 4 clock cycles, 2 clock cycles are needed.

This leads to the following values for FE and SE:

$$FE = \frac{\text{time than can be enhanced}}{\text{total time}} = \frac{4}{7} = 0.57$$

$$SE = \frac{\text{time than can be enhanced}}{\text{total time after enhancement}} = \frac{4}{2} = 2$$

By applying this to the calculation of the overall speedup OS:

$$OS = \frac{1}{(1 - FE) + \left(\frac{FE}{SE}\right)} = \frac{1}{(1 - 0.57) + \left(\frac{0.57}{2}\right)} = 1.4$$

Such value is to be compared with the maximum speedup that can be achieved with an enhanced execution setup in this case.

Such maximum is obtained by applying Amdahl's Law for Absolute Limits. The corresponding mathematical relations is as follows:

$$1 \leq OS \leq \frac{1}{(1 - FE)} = \frac{1}{(1 - 0.57)} = 2.3$$

The acceleration provided in the execution of the tasks in the third scenario is thus very interesting.

The present CGRA architecture 10 therefore aids in accelerating a given carrying out of a task in a manycore architecture.

Such gain is obtained by dedicating elements to perform only memory operations (namely LOAD and STORE) and the other elements to execute arithmetic and logic operations while getting data from the former elements.

This implies separating the calculation instructions from the input data instructions and creating an optimal register map scheme between the processing elements PE and the memory units MU.

The obtained gain is also increased by the spatial arrangement of the networks 12 and 14 in the CGRA architecture 10, which ensures that the distance between the processing elements PE and the memory units MU implied in an elementary operation is the shortest possible.

Other embodiments of the present CGRA architecture 10 may be considered.

For instance, it may be considered other geometries for the networks 12 and 14.

As a specific example, it may be advantageous that there is same type of connection between the processing elements PE, specially the processing elements PE that are situated at extremities could avoid the longest connections in the CGRA architecture 10. This provides a mesh torus type of switchless interconnect network in the network 12 of processing elements PE.

The architecture to consider here will share the property according to which each processing element PE is connected with at least one memory unit MU by connections through which the memory unit MU can exchange data with the processing element PE.

When appropriate, it can also be considered to separate the tasks among group of processing units.

For instance, the network 12 of processing elements PE could be soft clustered (software-based clustering, performed at the compile time while scheduling the instructions for each processing units) to perform two separate tasks, i.e., one cluster of the network 12 (thereby forming a sub-array of processing elements PE) is devoted to carry out one task while the other cluster of the network 12 is devoted to carry out another task. Such configuration is notably adapted for the case of two applications.

Another example is the case of convolution in which the same kernel is applied to each part of an image. In such case, it is advantageous to operate the kernel in parallel, each group of processing elements PE applying the same kernel to different part of the image.

The two previous examples can be combined in presence of several applications consisting in applying a respective kernel. The network 12 and 14 of processing units is there divided in groups of processing units (a processing unit corresponds to a group of processing elements PE and memory units MU) for which the role is to apply a respective kernel to a respective image. There is no group of processing units sharing the same time, the same kernel, and the same image with another group of processing units, at least one element differs.

The scheduling process of the compiler 18 can be improved.

In particular, in the conversion process of application into operations by the compiler 18, the compiler 18 eliminates redundant operations.

This notably avoids issuing extra MOVE operations to move data among them.

Data hazards, such as Read after Write (RAW), Write after Read (WAR), and Write after Write (WAW), may also be avoided by either inserting stalls (no-operation instructions) or code reordering.

Another optimization that can be carried out during the conversion process is modifying the execution of some steps.

For instance, in case the operation is an accumulation, it can be considered temporarily storing the accumulations in a local register. This results in avoiding useless STORE instructions to perform memory access for only the final result.

In each embodiment, the coarse-grained reconfigurable array architecture has an improved execution time.

**Claims**

1. Coarse-grained reconfigurable array architecture (10) adapted to carry out tasks, the coarse-grained reconfigurable array architecture (10) comprising:

   - a network (12) of processing elements (PE), each processing element (PE) being connected with other processing elements (PE) by connections ($C_{PE-PE}$) through which the processing element (PE) can exchange data with at least one of the other processing elements (PE),
   - a network (14) of memory units (MU), each memory unit (MU) being adapted to exchange data with several processing elements (PE), each processing element (PE) being connected with at least one memory unit (MU) by connections ($C_{PE-MU}$) through which the memory unit (MU) can exchange data with the processing element (PE),
   - a compiler (18) adapted to convert the tasks to be carried out by the coarse-grained reconfigurable array architecture (10) into elementary operations,
   each elementary operation consisting in applying a calculation on at least one input data to calculate an output data by executing at least one input data exchange instruction, a calculation instruction and an output data exchange instruction,
   the compiler (18) being further adapted to allocate each instruction to the appropriate processing element (PE) or memory unit (MU),
   - a memory controller (20) adapted to fetch the input data exchange instructions, the calculation instructions and the output data exchange instructions,
   the memory controller (20) being further adapted to send each calculation instruction and output data exchange to the appropriate processing element (PE) to execute said calculation instruction and said output data exchange instruction and
   the memory controller (20) being further adapted to send each input data exchange instruction to the appropriate memory unit (MU) to execute said input data exchange instruction.

2. Coarse-grained reconfigurable array architecture according to claim 1, wherein, for each elementary instruction,

   the memory controller (20) sends each calculation instruction and output data exchange instruction to a processing element (PE) to execute said calculation instruction and output data exchange instruction at a predefined time,
   the memory controller (20) further sends each input data exchange instruction to a memory unit (MU) connected to said processing element (PE), the input data exchange instructions being sent to the memory unit (MU) so that the memory unit (MU) has provided the input data to the processing element (PE) before the predefined time.

3. Coarse-grained reconfigurable array architecture according to claim 1, wherein, for each elementary instruction,

   the memory controller (20) sends each calculation instruction and output data exchange instruction to a processing element (PE) to execute said calculation instruction and output data exchange instruction at a predefined time,
   the memory controller (20) further sends a respective input data exchange instruction to a respective memory unit (MU) connected to said processing element (PE), the input data exchange instructions being sent to each memory unit (MU) so that the memory unit (MU) has provided the data to the processing element (PE) before the predefined time.

4. Coarse-grained reconfigurable array architecture according to claim 3, wherein the memory units (MU) provide simultaneously the data to the processing element (PE).

5. Coarse-grained reconfigurable array architecture according to any one of claims 1 to 4, wherein the network (12) of processing elements (PE) is arranged in a bidimensional array.

**6.** Coarse-grained reconfigurable array architecture according to claim 5, wherein the network (12) of processing elements (PE) comprises columns of processing elements (PE) and rows of processing elements (PE) and wherein, for each processing element (PE), the processing elements (PE) with which a processing element (PE) can exchange data are the processing elements (PE) which are adjacent to said processing element (PE) along the row and the column to which said processing element (PE) belongs.

**7.** Coarse-grained reconfigurable array architecture according to any one of the previous claims 1 to 6, wherein the network (14) of memory units (MU) is arranged in a bidimensional array.

**8.** Coarse-grained reconfigurable array architecture according to claim 7, wherein the bidimensional array of memory units (MU) comprises columns of memory units (MU) and rows of memory units (MU), each memory unit (MU) being placed in a space delimited by four respective processing elements (PE).

**9.** Coarse-grained reconfigurable array architecture according to any one of claims 1 to 8, wherein each memory unit (MU) is adapted to communicate with four respective processing elements (PE).

**10.** Method for carrying out tasks with a coarse-grained reconfigurable array architecture (10), the coarse-grained reconfigurable array architecture (10) comprising:

- a network (12) of processing elements (PE), each processing element (PE) being connected with other processing elements (PE) by connections ($C_{PE-PE}$) through which the processing element (PE) can exchange data with at least one of the other processing elements (PE),
- a network (14) of memory units (MU), each memory unit (MU) being adapted to exchange data with several processing elements (PE), each processing element (PE) being connected with at least one memory unit (MU) by connections ($C_{PE-MU}$) through which the memory unit (MU) can exchange data with the processing element (PE),
- a compiler (18), and
- a memory controller (20),

the method comprising the steps of:

- converting the tasks to be carried out by the coarse-grained reconfigurable array architecture (10) into elementary operations,

each elementary operation consisting in applying a calculation on at least one input data to calculate an output data by executing at least one input data exchange instruction, a calculation instruction and an output data exchange instruction,

- allocating each instruction to the appropriate processing element (PE) or memory unit (MU),
- fetching the input data exchange instructions, the calculation instructions and the output data exchange instructions, the fetching step being carried out by the memory controller (20),
- sending each calculation instruction and output data exchange to the appropriate processing element (PE) to execute said calculation instruction and said output data exchange instruction, and
- sending each input data exchange instruction to the appropriate memory unit (MU) to execute said input data exchange instruction, the sending steps being carried out by the memory controller (20).

FIG.1

FIG.2

**FIG.3**

MU

| NW | NE | |
|---|---|---|
| Tx | SW | SE |
| Rx | BR | |

Decoder

Control System

IRF

AGU

LSU

# FIG.4

| Case 1 | PE | | | | | B [i] | C [i] | | * | A [i] | |
|---|---|---|---|---|---|---|---|---|---|---|---|
| | | n−4 | n−3 | n−2 | n−1 | n | n+1 | n+2 | n+3 | n+4 | n+5 | n+6 |

| Case 2 | PE | | | | | * | | | | | | |
|---|---|---|---|---|---|---|---|---|---|---|---|---|
| | MU | B [i] | | C [i] | | | A [i] | | | | | |
| | | n−4 | n−3 | n−2 | n−1 | n | n+1 | n+2 | n+3 | n+4 | n+5 | n+6 |

| Case 3 | PE | | | | | * | | | | | | |
|---|---|---|---|---|---|---|---|---|---|---|---|---|
| | MU1 | | | C [i] | | | A [i] | | | | | |
| | MU2 | | | B [i] | | | | | | | | |
| | | n−4 | n−3 | n−2 | n−1 | n | n+1 | n+2 | n+3 | n+4 | n+5 | n+6 |

PE — MU

PE — MU

PE — MU1 — MU2

## FIG.5

Europäisches
Patentamt

European
Patent Office

Office européen
des brevets

# EUROPEAN SEARCH REPORT

**Application Number**

**EP 23 30 7090**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRABHAKAR RAGHU ET AL: "Plasticine: A reconfigurable architecture for parallel patterns", 2017 ACM/IEEE 44TH ANNUAL INTERNATIONAL SYMPOSIUM ON COMPUTER ARCHITECTURE (ISCA), ACM, 24 June 2017 (2017-06-24), pages 389-402, XP033268533, DOI: 10.1145/3079856.3080256 [retrieved on 2017-12-12] * the whole document * | 1-10 | INV.<br>G06F15/78<br><br>ADD.<br>G06F15/80 |
| X,D | US 2016/328231 A1 (DOERR MICHAEL B [US] ET AL) 10 November 2016 (2016-11-10) * the whole document * | 1-10 | |
| X | US 2022/261364 A1 (PRABHAKAR RAGHU [US] ET AL) 18 August 2022 (2022-08-18) * abstract * * figures 1, 16, 17 * * paragraph [0075] - paragraph [0093] * * paragraph [0156] - paragraph [0193] * | 1-10 | **TECHNICAL FIELDS SEARCHED (IPC)**<br><br>G06F |
| X | ZHANG YAQI ET AL: "SARA: Scaling a Reconfigurable Dataflow Accelerator", 2021 ACM/IEEE 48TH ANNUAL INTERNATIONAL SYMPOSIUM ON COMPUTER ARCHITECTURE (ISCA), IEEE, 14 June 2021 (2021-06-14), pages 1041-1054, XP033951969, DOI: 10.1109/ISCA52012.2021.00085 [retrieved on 2021-07-27] * the whole document * | 1-10 | |

The present search report has been drawn up for all claims

| Place of search | Date of completion of the search | Examiner |
|---|---|---|
| The Hague | 8 May 2024 | Wirtz, Hanno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 30 7090

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2024

| Patent document cited in search report | Publication date | Patent family member(s) | | Publication date |
|---|---|---|---|---|
| US 2016328231 A1 | 10-11-2016 | CN | 105378651 A | 02-03-2016 |
| | | CN | 109284131 A | 29-01-2019 |
| | | EP | 3005078 A2 | 13-04-2016 |
| | | EP | 3690641 A1 | 05-08-2020 |
| | | JP | 7210078 B2 | 23-01-2023 |
| | | JP | 7264955 B2 | 25-04-2023 |
| | | JP | 2016526220 A | 01-09-2016 |
| | | JP | 2019145172 A | 29-08-2019 |
| | | JP | 2021192257 A | 16-12-2021 |
| | | US | 2014351551 A1 | 27-11-2014 |
| | | US | 2016328231 A1 | 10-11-2016 |
| | | US | 2019369990 A1 | 05-12-2019 |
| | | US | 2021208895 A1 | 08-07-2021 |
| | | US | 2023153117 A1 | 18-05-2023 |
| | | WO | 2014190263 A2 | 27-11-2014 |
| US 2022261364 A1 | 18-08-2022 | TW | 202240384 A | 16-10-2022 |
| | | US | 11126574 B1 | 21-09-2021 |
| | | US | 2022261364 A1 | 18-08-2022 |
| | | US | 2022261365 A1 | 18-08-2022 |
| | | WO | 2022173821 A1 | 18-08-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11544072 B